# EUROPÄISCHE PATENTSCHRIFT

(11) **EP 0 557 758 B1**
(45) Veröffentlichungstag und Bekanntmachung des Hinweises auf die Patenterteilung: **06.03.1996**
(21) Anmeldenummer: 93101768.5
(22) Anmeldetag: 05.02.1993
(51) Int. Cl.: C11B 1/00, C11B 1/04, C11B 1/10, A23N 1/02

(54) **Verfahren zur Gewinnung von Olivenöl**
Process for producing olive oil
Procédé pour obtenir de l'huile d'olive

(30) Priorität: 27.02.1992 DE 4206006
(43) Veröffentlichungstag der Anmeldung: 01.09.1993
(73) Patentinhaber: Westfalia Separator AG, D-59302 Oelde (DE)
(72) Erfinder: Düpjohann, Josef, W-4740 Oelde (DE); Geissen, Klemens, W-4740 Oelde (DE)
(74) Vertreter: Stracke, Alexander, Dipl.-Ing.

(56) Entgegenhaltungen:
- ES-A- 2 010 535
- FR-A- 2 422 713
- FR-E- 65 176
- GB-A- 1 029 360
- US-A- 1 800 336

## Beschreibung

Die Erfindung bezieht sich auf ein Verfahren zur Gewinnung von Olivenöl, bei dem mittels einer Mühle ein Fruchtbrei hergestellt wird, der in einem Mischer aufgeschlossen und anschließend zwecks Abtrennung des Öles aus dem Fruchtbrei einer Vollmantelschneckenzentrifuge zugeführt wird, wobei das Öl anschließend in einer Tellerzentrifuge unter Zugabe einer Wassermenge von 4% ö 6% der zulaufenden Ölmenge zwecks Abscheidung von Wasser- und Feststoffresten nachbehandelt wird.

Es ist ein Verfahren dieser Art bekannt (Firmendruckschrift der Firma Westfalia Separator AG mit dem Titel "Separatoren und Dekanter für die Olivenölindustrie" und der Veröffentl.-Nr. 9997-8745-000/0192, Seite 1, Abb. 4), bei dem dem Fruchtbrei nach dem Mischer ca. 50 Prozent Gewichtsanteile Wasser zugesetzt und dieses Gemisch in der Schneckenzentrifuge in die drei Phasen Trüböl, verdünntes Fruchtwasser und Feststoffe aufgeteilt wird. Das Trüböl wird anschließend zwecks Minimierung noch vorhandener Wasser- und Feststoffreste einer ersten Tellerzentrifuge unter Zugabe von Wasser zugeführt. Die zugegebene Wassermenge entspricht ca. 5 Prozent der zulaufenden Ölmenge und dient zur Waschung und Polierung des Öles in dieser Stufe. Der Feststoff, in dem noch ca. 50 Prozent Wasser enthalten ist, wird getrocknet und kann dann als Brennmaterial verwendet werden. Das verdünnte Fruchtwasser wird in einer zweiten Tellerzentrifuge entölt. Die hier abgetrennte Ölphase wird mit dem Ölablauf der Schneckentrifuge vermischt und in der ersten Tellerzentrifuge gereinigt. Das entölte Fruchtwasser wird in künstlich angelegte Sickerteiche gegeben, wo es in den heißen Sommermonaten verdunstet bzw. ins Erdreich sickert. Dabei kommt es zu üblen Geruchsbelästigungen durch das faulende Fruchtwasser und zu Grundwasserverschmutzungen. Da das anfallende Abwasser stark belastet ist, werden seitens der Umweltbehörde immer strengere Auflagen gemacht.

Eine mittlere Anlage mit einer Verarbeitungskapazität von 150.000 Kg Oliven pro Tag produziert bei einer Verwendung des bekannten Verfahrens in einer Kampagne von 100 Tagen ca. 15.000 m³ hochbelastetes Abwasser mit einer BSB von 90.000 bis 100.000 mg O₂/l.

Fast die gleiche Menge Frischwasser wird für die Produktion benötigt, was besonders in regenarmen Jahren ein weiteres Problem darstellt.

Durch die US-A-1 800 336 ist ein Verfahren zur Gewinnung von Olivenöl bekannt, bei dem entsprechend der Fig. 1 in einer ersten Stufe (Centrifugal Separation) eine Trennung von Öl (erste Phase) und Wasser erfolgt, dessen Feststoffanteile (zweite Phase) durch einen Absetzbehälter (Settling Tank) in aufkonzentrierter Form (Water Waste) abgeschieden werden bevor eine weitere Zentrifugalbehandlung (Centrifugal Separator) zur Trennung in Öl und Wasser (dritte Phase) erfolgt.

Bei dem zentrifugalen Trennvorgang handelt es sich somit um eine Dreiphasentrennung mit den im vorhergehenden geschilderten Nachteilen.

Es ist ferner ein Verfahren zur Gewinnung von Olivenöl bekannt (GB-A-1 029 360), bei dem eine zentrifugale Dreiphasentrennung zum Einsatz kommt. Die verwendete Zentrifuge ist mit den drei Abläufen 8,9 und 10 ausgerüstet.

Bei einem nach der IT-A-675 801 bekannten Verfahren zur Ölgewinnung erfolgt in einer Zentrifuge 15 nur eine Abtrennung der Feststoffe (erste Phase). Erst in einer Zentrifuge 17 findet die eigentliche Trennung in Öl 23 (zweite Phase) und Wasser 21 (dritte Phase) sowie in Restfeststoffe 25 statt. Die Wasserzugabe 28 erfolgt über eine Klärzentrifuge 24 und über eine Leitung 30 zum Mischer 11.

Durch die IT-A-840 051 ist eine Zweiphasen-Schneckenzentrifuge bekannt geworden, die mit einer Vorrichtung zur Einstellung des Flüssigkeitsspiegels versehen ist.

Der Erfindung liegt die Aufgabe zugrunde, ein Verfahren zur Gewinnung von Olivenöl der eingangs genannten Art so zu gestalten, daß die zugesetzte Frischwassermenge stark reduziert, der gerätetechnische Aufwand verringert und stark belastetes Abwasser vermieden wird.

Diese Aufgabe wird erfindungsgemäß dadurch gelöst, daß bei Einsatz frischer Oliven die Herstellung des Fruchtbreis ohne Wasserzugabe, bei Einsatz eingetrockneter Oliven entsprechend dem Zustand der Oliven unter Wasserzugabe erfolgt, daß der aufgeschlossene Fruchtbrei in einer Zweiphasenschneckenzentrifuge in Öl und ein Feststoff-Wasser-Gemisch aufgetrennt wird, wobei das feststoff-Wasser-Gemisch für eine nachfolgende Extraktion und Trocknung geeignet ist.

Bei dem erfindungsgemäßen Verfahren wird der Frischwasserverbrauch auf den Anteil gesenkt, der zum Betrieb der ersten Tellerzentrifuge benötigt wird. Dabei ist die Qualität des aus dieser Stufe abgeschiedenen Wassers so gut, daß es in den Wasserkreislauf der Olivenwäsche geführt und daher nutzbringend, d.h. wassersparend verwendet werden kann.

Da bei der Herstellung des Fruchtbreis die Zugabe einer großen Frischwassermenge entfällt, belastet dieses Wasser nicht mehr den weiteren Verfahrensverlauf und es braucht auch nicht diese Wassermenge nach Beendigung des Verfahrens als Abwassermenge entsorgt zu werden.

Mit dem erfindungsgemäßen Verfahren wurde jedoch nicht nur das Abwasserproblem gelöst, sondern es wurde auch der gerätetechnische Aufwand zur Durchführung des Verfahrens verringert, da die Schneckenzentrifuge in der einund betriebssicheren Zweiphasenausführung statt in der sonst erforderlichen Dreiphasenausführung eingesetzt werden konnte und die Zentrifuge für die Nachbehandlung des aus der Dreiphasenschneckenzentrifuge austretenden Wassers entfällt.

Die Dreiphasenschneckenzentrifuge ist gegenüber der Zweiphasenschneckenzentrifuge konstruktiv aufwendiger und damit teurer.

Im Betrieb besteht bei der Dreiphasenschneckenzentrifuge die Gefahr einer Rückvermischung zwischen dem abgetrennten Olivenöl und dem Wasser. Ferner führen Gase aus dem abgetrennten Wasser zu einem klebrigen Niederschlag an der Schneckenzentrifuge und in der Umgebung, da das Wasser entsprechende Rückstände aus den Oliven enthält.

Bei der Dreiphasenschneckenzentrifuge ist die Durchsatzleistung bezogen auf die Olivenölmenge geringer, da bei der Herstellung des Fruchtbreis eine Wasserzugabe erfolgt, die etwa 50 Prozent der verarbeiteten Olivenmenge entspricht. Der Energieverbrauch ist, bezogen auf die Olivenölmenge, aus dem vorgenannten Grund entsprechend höher.

Die Ausbeute an Olivenöl ist unter Verwendung der Dreiphasenschneckenzentrifuge geringer, da der anfallende Feststoff mehr Olivenöl enthält.

Beim zentrifugalen Trennen spielt die Viskosität des der Zentrifuge zugeführen Produktes eine entscheidende Rolle für das erzielbare Trennergebnis.

Bei dem gattungsgemäßen Verfahren wird der Fruchtbrei daher mit Wasser versetzt, um eine zufriedenstellende Trennung zwischen den drei Phasen Wasser, Öl und Feststoff in der Schneckenzentrifuge zu erzielen. Außerdem muß das abgetrennte Fruchtwasser ausreichend dünnflüssig sein, damit in der nachgeschalteten Tellerzentrifuge das Restöl weitgehend abgeschieden werden kann.

Beim erfindungsgemäßen Verfahren wurde überraschend gefunden, daß man beim Einsatz frischer Oliven bei der Herstellung des Fruchtbreis auf eine zusätzliche Wasserzugabe verzichten kann und beim Einsatz eingetrockneter Oliven entsprechend dem Zustand der Oliven bei der Herstellung des Fruchtbreis mit einer geringen Wasserzugabe auskommt, wenn die Schneckenzentrifuge so eingestellt wird, daß das gesamte Fruchtwasser im Feststoff verbleibt. In diesem Fall ist keine scharfe Trennung zwischen Öl und Wasser erforderlich, so daß trotz hoher Viskosität eine hohe Ölausbeute erzielt wird. Der hygroskopische Charakter des Feststoffes wirkt sich dabei positiv aus, während er beim Trennen von Wasser und Feststoff eher hinderlich ist und damit eine Verdünnung mit zusätzlichem Wasser bedingt.

Durch Verzicht auf die Frischwasserzugabe bei der Vermahlung der Oliven und vor der Zentrifugalbehandlung in der Schneckenzentrifuge verbleiben sämtliche Feinstfeststoffe, die sonst mit der Wasserphase bei der Dreiphasenschneckenzentrifuge bzw. mit dem Fruchtwasserablauf der zweiten Tellerzentrifuge ausgetragen werden und ein hochbelastetes Abwasser bilden, in der Feststoffphase der Schneckenzentrifuge. Der Wassergehalt erhöht sich zwar um 3 bis 4 Prozentpunkte in dieser Feststoffphase, sie kann jedoch in der üblichen Weise getrocknet und extrahiert werden.

Mit sinkendem Wassergehalt in den Früchten kann sich der Ölgehalt im Feststoffablauf der Schneckenzentrifuge erhöhen. Somit ist entsprechend dem Zustand der Oliven, eine Zusatzwasserdosierung vorzunehmen, die sich nach den vorgegebenen Grenzwerten für Ölausbeute und Umweltbelastung richtet, in der Form, daß die Ölausbeute zumindest gleich nach der nach dem bekannten Verfahren ist und die Anlage fruchtabwasserfrei arbeitet.

Eine schematische Darstellung des bekannten Verfahrens und zwei Ausführungsbeispiele für das erfindungsgemäße Verfahren sind in der Zeichnung dargestellt und werden im folgenden beschrieben.

Es zeigen:
Fig. 1 das bekannte Verfahren,
Fig. 2 und 3 Ausführungsformen des erfindungsgemäßen Verfahrens in schematischer Darstellung.

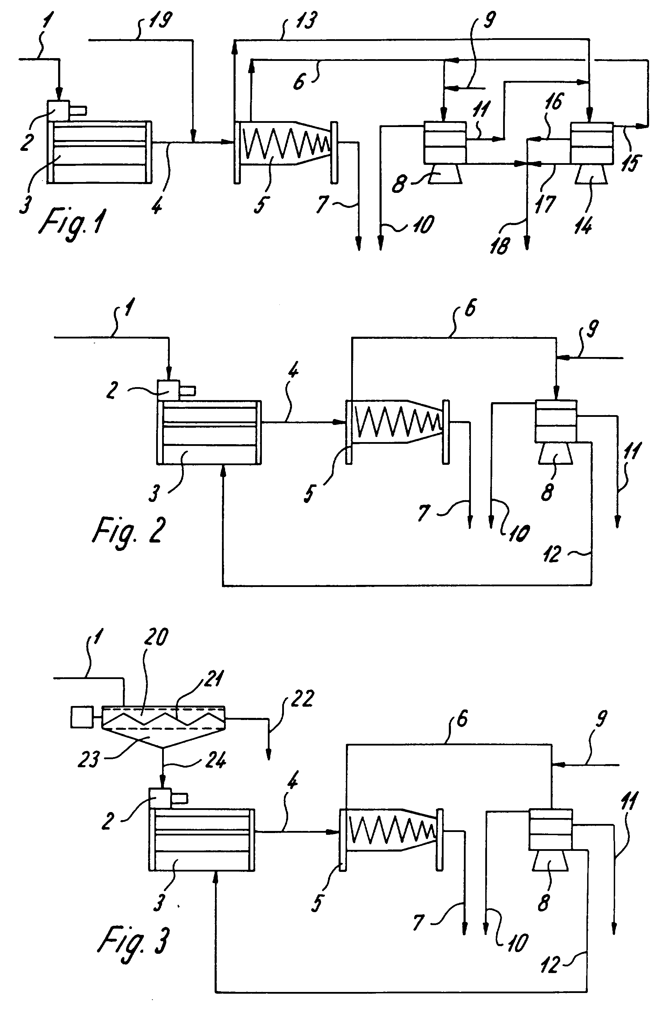

Bei dem bekannten Verfahren gemäß Fig. 1 werden die Oliven 1 in einer Mühle 2 zu einem Fruchtbrei zermahlen, der in einem temperierten Mischer 3 aufgeschlossen wird. Dem nach einer Reaktionszeit aus dem Mischer 3 ablaufenden, aufgeschlossenen Fruchtbrei 4 wird Frischwasser 19 mit der 0,5-fachen Menge, bezogen auf die Fruchtbreimenge, zugesetzt, um in der Schneckenzentrifuge 5 eine gute Trennung der drei Phasen Trüböl 6, Feststoffe 7 und Wasser 13 zu erreichen. Die Feststoffe 7 haben einen Gewichtsanteil von 50 bis 60 Prozent, bezogen auf die verarbeitete Olivenmenge.Das Trüböl 6 wird in einer ersten Tellerzentrifuge 8 zwecks Abscheidung von Wasser und Feststoffteilchen nachbehandelt. Zwecks Waschung und Polierung des Olivenöls wird der Tellerzentrifuge 8 mit dem Trüböl 6 4 ö 6 Prozent Wasser 9 zugesetzt, bezogen auf die zulaufende Trübölmenge. Bei 10 läuft Reinöl aus der Tellerzentrifuge 8 ab, dessen Gewichtsnateil abhängig ist vom Ölgehalt der Oliven. Das in der Tellerzentrifuge 8 abgetrennte Wasser 11 wird mit dem Wasserablauf 13 der Schneckenzentrifuge 5 vermischt und in einer zweiten Tellerzentrifuge 14 in Resttrüböl 15, Wasser 16 und Schlamm 17 aufgetrennt. Das Wasser 16 und der Schlamm 17 ergeben zusammen mit dem Feststoff 12 aus der ersten Tellerzentrifuge 8 das Abwasser 18, dessen Gewichtsanteil 70 bis 80 Prozent beträgt, bezogen auf die eingesetzt Olivenmenge.

Bei dem erfindungsgemäßen Verfahren nach der Fig. 2 werden die Oliven 1 ohne Zugabe von Wasser in einer Mühle 2 zu einem Fruchtbrei zermahlen, der in einem temperierten Mischer 3 aufgeschlossen wird. Der nach einer Reaktionszeit aus dem Mischer 3 ab laufende, aufgeschlossene Fruchtbrei 4 wird ohne Wasserzugabe in einer Schneckenzentrifuge 5 aufgetrennt in Trüböl 6 und Feststoff 7, deren Gewichtsanteile abhängig sind vom Öl- und Wassergehalt in den Oliven. Das Trüböl 6 wird in einer Tellerzentrifuge 8 zwecks Abscheidung von Wasser- und Feststoffteilchen nachbehandelt. Zwecks Waschung und Polierung des Olivenöls wird der Tellerzentrifuge mit dem Trüböl 6 ca. 5 Prozent Wasser 9 zugesetzt, bezogenauf die zulaufende Trübölmenge. Bei 10 läuft Reinöl aus der Tellerzentrifuge 8 ab, dessen Gewichtsanteil abhängig ist vom Ölgehalt in den Oliven. Das in der Tellerzentrifuge abgetrennte Wasser 11 ist relativ sauber und kann dem Umlaufwasser der Olivenwäsche beigemischt werden. Die in der Tellerzentrifuge 8 abgeschiedenen Feststoffe 12 werden in periodischen Zeitabständen ausgetragen und in den Mischer 3 zurückgeführt. Bei dem erfindungsgemäßen Verfahrer wird somit kein Abwasser produziert.

Bei dem erfindungsgemäßen Verfahren nach der Fig. 3 werden die gewaschenen Oliven 1 einem Siebzylinder 20 zugeführt, in dem sich eine mit Schlagleisten 21 versehene Welle dreht. Der Abstand zwischen dem Innendurchmesser des Siebzylinders 20 und dem Außendurchmesser der Schlagleisten 21 ist in Abhängigkeit von den Fruchtkerngrößen variierbar. Die rotierenden Schlagleisten bewirken eine intensive Entkernung. Sie transportieren außerdem die Kerne zu dem dem Einführende der Früchte abgewandten Ende des Siebzylinders, an dem sich der Auslaß für die Kerne 22 befinden.

Die Fruchtpülpe tritt durch die Perforierung des Siebzylinders 20 aus und wird von einem Auffangtrichter 23 aufgenommen. Von dort aus gelangt die Pülpe 24 in den im Zusammenhang mit der Fig. 2 beschriebenen Prozeßablauf.

Die Kerne 22 mit den noch eingeschlossenen Mandeln werden getrennten Verarbeitungslinien zugeführt.

Die Aufteilung der Oliven in Fruchtfleisch und Kerne ermöglicht eine getrennte Weiterverarbeitung der Endprodukte: entölte Fruchtpülpe, Kernholz und Kernmandeln.

### Bezugszeichen

1 Oliven
2 Mühle
3 Mischer
4 Fruchtbrei
5 Schneckenzentrifuge
6 Trüböl
7 Feststoffe
8 Tellerzentrifuge
9 Wasser
10 Reinöl
11 Wasser
12 Feststoff
13 Wasserablauf
14 Tellerzentrifuge
15 Resttrüböl
16 Wasser
17 Schlamm
18 Abwasser
19 Frischwasser
20 Siebzylinder
21 Schlagleiste
22 Kerne
23 Auffangtrichter
24 Pülpe

## Patentansprüche

1. Verfahren zur Gewinnung von Olivenöl, bei dem mittels einer Mühle ein Fruchtbrei hergestellt wird, der in einem Mischer aufgeschlossen und anschließend einer Vollmantelschneckenzentrifuge zwecks Abtrennung des Öles aus dem Fruchtbrei zugeführt wird, wobei das Öl anschließend in einer Tellerzentrifuge unter Zugabe einer Wassermenge von 4 bis 6 % der zulaufenden Ölmenge zwecks Abscheidung von Wasser- und Feststoffresten nachbehandelt wird, **dadurch gekennzeichnet,** daß bei Einsatz frischer Oliven die Herstellung des Fruchtbreis ohne Wasserzugabe, bei Einsatz eingetrockneter Oliven entsprechend dem Zustand der Oliven unter Wasserzugabe erfolgt, daß der aufgeschlosssene Fruchtbrei in einer Zweiphasen-Schneckenzentrifuge (5) in Öl und ein Feststoff-Wasser-Gemisch aufgetrennt wird, wobei das Feststoff-Wasser-Gemisch für eine nachfolgende Extraktion und Trocknung geeignet ist.

2. Verfahren nach Anspruch 1, dadurch gekennzeichnet, daß die Vermahlung frischer, nicht eingetrockneter Oliven ohne Wasserzugabe erfolgt.

3. Verfahren nach Anspruch 1, dadurch gekennzeichnet, daß das gesamte bei der Zentrifugalbehandlung in der Tellerzentrifuge (8) abgeschiedene Wasser zur Olivenwäsche verwendet wird.

4. Verfahren nach Anspruch 1, dadurch gekennzeichnet, daß die gewaschenen Früchte zum Entkernen in einen Siebzylinder (20) geführt werden, in dem sich eine mit Schlagleisten (21) versehene Welle dreht, wobei der Abstand zwischen dem Innendurchmesser des Siebzylinders (20) und dem Außendurchmesser der Schlagleisten (21) in Abhängigkeit von den Fruchtkerngrößen variiert werden kann.

5. Verfahren nach Anspruch 4, dadurch gekennzeichnet, daß durch die Schlagleisten (21) die Kerne zu dem dem Einführende der Früchte abgewwandten Ende des Siebzylinders (20) transportiert werden und dort aus dem Siebzylinder austreten.

6. Verfahren nach Anspruch 4 oder 5, dadurch gekennzeichnet, daß die aus dem Siebzylinder (20) austretende Fruchtpülpe von einem Auffangtrichter (23) aufgenommen wird, von dem sie in die Mühle (2) eingeführt wird.

## Claims

1. A process for producing olive oil wherein a fruit mash is produced by means of a crusher, which mash is broken down in a mixer and then fed to a full-casing screw centrifuge for the purposes of separating the oil out of the fruit mash, the oil then being subjected to a posttreatment in a plate centrifuge with the addition of an amount of water of from 4 to 6% of the amount of oil being supplied, for the purposes of separation of water and solid residues, characterised in that when using fresh olives the production of the fruit mash is effected without the addition of water and when using dried olives it is effected with the addition of water according to the condition of the olives, and that the broken-down fruit mash is separated into oil and a solid-water mixture in a two-phase screw centrifuge (5), the solid-water mixture being suitable for subsequent extraction and drying.

2. A process according to claim 1 characterised in that the crushing of fresh undried olives is effected without the addition of water.

3. A process according to claim 1 characterised in that all the water which is separated off in the centrifugal treatment in the plate centrifuge (8) is used for the olive washing operation.

4. A process according to claim 1 characterised in that for removal of the stones the washed fruits are passed into a sieve cylinder (20) in which a shaft provided with beater bars (21) rotates, wherein the spacing between the inside diameter of the sieve cylinder (20) and the outside diameter of the beater bars (21) can be varied in dependence on the sizes of the fruit stones.

5. A process according to claim 4 characterised in that the stones are transported by the beater bars (21) to the end of the sieve cylinder (20) which is remote from the fruit introduction end and there issue from the sieve cylinder.

6. A process according to claim 4 or claim 5 characterised in that the fruit pulp issuing from the sieve cylinder (20) is received by a catch funnel (23) by which it is introduced into the crusher (2).

## Revendications

1. Procédé de production d'huile d'olive, dans lequel une purée de fruits est réalisée au moyen d'un broyeur, laquelle purée est dissoute dans un mélangeur puis, pour séparer l'huile de la purée de fruits, est conduite à une centrifugeuse à vis à bol plein, l'huile subissant ensuite un traitement consécutif dans une centrifugeuse à plateau pour extraire les restes d'eau et de matière solide, en ajoutant une quantité d'eau dans une proportion de 4% à 6% de la quantité d'huile arrivant, caractérisé en ce que la purée de fruits est obtenue sans addition d'eau lorsque des olives fraîches sont utilisées, et avec addition d'eau, suivant l'état des olives, lorsque ce sont des olives séchées qui sont utilisées, en ce que la purée de fruits dissoute est séparée, dans une centrifugeuse à vis (5) à deux phases, en huile et en mélange eau - matière solide, le mélange eau - matière solide étant approprié pour une extraction et une dessiccation consécutives.

2. Procédé suivant la revendication 1, caractérisé en ce que le broyage d'olives fraîches, non séchées, s'effectue sans addition d'eau.

3. Procédé suivant la revendication 1, caractérisé en ce que la totalité de l'eau extraite lors du traitement centrifuge dans la centrifugeuse à plateau (8) est utilisée pour le lavage des olives.

4. Procédé suivant la revendication 1, caractérisé en ce que les fruits lavés sont conduits dans un cylindre perforé (20) pour y être dénoyautés, cylindre dans lequel tourne un arbre muni de battoirs (21), l'écart entre le diamètre intérieur du cylindre perforé (20) et le diamètre extérieur des battoirs (21) pouvant être modifié en fonction de la taille des noyaux des fruits.

5. Procédé suivant la revendication 4, caractérisé en ce que les noyaux sont transportés par les battoirs (21) à l'extrémité du cylindre perforé (20) opposée à l'extrémité d'introduction des fruits, et sortent alors du cylindre perforé.

6. Procédé suivant la revendication 4 ou 5, caractérisé en ce que la pulpe des fruits sortant du cylindre perforé (20) est reçue par un cône collecteur (23) depuis lequel elle est conduite dans le broyeur (2).
